# EUROPÄISCHE PATENTSCHRIFT

(11) **EP 2 189 992 B1**
(45) Veröffentlichungstag und Bekanntmachung des Hinweises auf die Patenterteilung: **23.03.2016**
(21) Anmeldenummer: 09014249.8
(22) Anmeldetag: 13.11.2009
(51) Int. Cl.: H01F 7/08, F16K 31/06

(54) **Hubanker-Antrieb**
Solenoid armature drive
Entraînement d'ancre de levage

(30) Priorität: 19.11.2008 DE 202008015303 U
(43) Veröffentlichungstag der Anmeldung: 26.05.2010
(73) Patentinhaber: Bürkert Werke GmbH, 74653 Ingelfingen (DE)
(72) Erfinder: Beyer, Olaf, 01239 Dresden (DE); Dörr, Martin, 74653 Ingelfingen (DE); Gauss, Wilhelm, 74676 Niedernhall (DE); Hettinger, Martin, 74653 Ingelfingen (DE); Kahl, Sebastian, 74670 Forchtenberg (DE)
(74) Vertreter: Prinz & Partner mbB

(56) Entgegenhaltungen:
- US-A- 5 139 226
- US-A- 5 653 422
- US-A1- 2003 107 018

## Beschreibung

Die Erfindung betrifft einen elektromagnetischen Hubanker-Antrieb, insbesondere für Ventile.

Hubanker-Antriebe sind bei Ventilen und Relais sehr verbreitet. Sie eignen sich besonders für miniaturisierte Ausführungen. Wesentliche Bestandteile eines Hubanker-Antriebs sind ein Magnetjoch, das einen Eisenkreis bildet, und eine Magnetspule, die einen der Jochschenkel umgibt. Der andere Jochschenkel ist geteilt in einen festen Bestandteil des Magnetjochs und einen beweglichen Bolzen, der das Betätigungselement des Antriebs bildet.

Durch die Erfindung wird ein Hubanker-Antrieb, insbesondere für Ventile, geschaffen, mit dem bei kleiner Bauform hohe Magnetkräfte erzielbar sind und dessen Bestandteile in vielfältigen Varianten frei miteinander kombiniert werden können. Damit ist eine Anpassung an einen vorgegebenen Bauraum möglich, ohne dass spezifische Komponenten angefertigt werden müssen. Die gleichen standardisierten Bestandteile werden nur anders miteinander kombiniert.

Mehrere Ausführungsformen der Erfindung sind in den beigefügten Schutzansprüchen angegeben.

Bei einer ersten Ausführungsform sind sowohl der Jochbolzen als auch Jochstopfen und Kernbolzen von einer Magnetspule umgeben. Durch die doppelte Ausführung der Magnetspule werden die Magnetkräfte erhöht, ohne Bauhöhe und Baubreite zu vergrößern. Lediglich die in der Regel unkritische Bautiefe nimmt zu. Es ist an sich bereits aus der DE 20100471 U1 bekannt, einen Klappanker-Antrieb auf beiden Jochschenkeln mit einer Magnetspule zu versehen. Die dort vorgeschlagene Jochausbildung lässt aber keine flexible Verwendung der Bestandteile in unterschiedlichen Kombinationen zu.

Gemäß einer anderen Ausführungsform der Erfindung hat der Jochbolzen einen gegenüber Jochstopfen und Kernbolzen reduzierten Durchmesser, und die den Jochbolzen umgebende Magnetspule hat ein entsprechend vergrößertes Wicklungsvolumen. Auch mit dieser Maßnahme werden die erzielbaren Magnetkräfte gesteigert. Der reduzierte Durchmesser des Jochbolzens kann durch Verwendung von hochwertigem Weicheisen kompensiert werden.

In vorteilhafter Weise können die Magnetspulen, Jochbolzen, Jochschenkel, Jochstopfen und Kernbolzen in verschiedenen Bauformen frei kombiniert werden.

Gegenstand der Erfindung ist auch ein Ventil, insbesondere miniaturisiertes Magnetventil, mit einem Hubanker-Antrieb der beschriebenen Art, wobei der Kernbolzen an seinem äußeren axialen Stirnende einen Dichtkörper trägt, der mit einem Dichtsitz des Ventils zusammenwirkt.

Weiterhin ist Gegenstand der Erfindung ein Ventil, insbesondere miniaturisiertes Magnetventil, mit einem Hubanker-Antrieb der beschriebenen Art, wobei der Kernbolzen an seinem äußeren axialen Stirnende eine Schaltwippe betätigt, die ihrerseits eine mit zwei Dichtsitzen des Ventils zusammenwirkende Membran betätigt.

Die besonderen Vorteile des erfindungsgemäßen Hubanker-Antriebs sind insbesondere:
- Es liegt eine Kraft-Hub-Charakteristik wie bei einem herkömmlichen Hubanker vor. Da nur ein veränderlicher Luftspalt existiert, ergibt sich im Vergleich zu einem Plattenanker ein höheres Kraftniveau bei größeren Luftspalten.
- Das Wickelfenster beider Magnetspulen zusammen ist doppelt so groß wie bei einer einzelnen Spule. In der Wirkung hat man eine Spule doppelter Bauhöhe zur Verfügung, braucht aber kaum Eisen für die Flussrückführung. Bei gleicher elektrischer Leistung entspricht die Kraft-Hub-Kennlinie eines Einzelspulensystems bei 110 % Nennstrom dem des Doppelspulensystems bei 70 % Nennstrom.
- Bauhöhe und/oder Baubreite des Antriebs bzw. Ventils können reduziert werden, wenn man gleiche Magnetkräfte wie beim Einspulensystem erzeugen will. Nur die meist unkritische Bautiefe nimmt etwas zu.
- Bei Verwendung von zwei Magnetspulen kann durch Umschaltung zwischen Parallelschaltung und Reihenschaltung auf einfache Weise eine Übererregung erzeugt werden.
- Eine sichere Adaption der Spulen kann über Steckerfahnen mithilfe einer Leiterplatte erfolgen, die auch eine Ansteuerelektronik aufnehmen kann.
- Im Bereich des Hubankers können alle Spezifizierungen wie bei einfachen Hubankersystemen angewendet werden, nämlich Schubkonus für Proportional- und Schaltmagnete, Kurzschlussring für Wechselstromausführungen, Dauermagnete für Impulsvarianten, Polhülse bzw. Polschuh zur Verbesserung der Flussleitung.

Ist im Ventil eine Medientrennung vorgesehen, so wird die höchste Magnetkraft erreicht, wenn Kernbolzen, Jochstopfen und Jochbolzen aus einem magnetisierbaren Material gefertigt sind, welches eine möglichst hohe Sättigungsmagnetisierung aufweist, wie beispielsweise Kobalteisen.

In Verbindung mit Kobalteisen für Kern, Stopfen und Jochbolzen sowie einem E-Band für die beiden Jochblechstapel wird also bei Medientrennung der Eisenkreis werkstoffseitig optimiert.

Solche Materialien sind aber korrosionsanfällig und können daher in Antrieben ohne Medientrennung nicht eingesetzt werden.

Bei Antrieben ohne Medientrennung kann der Eisenkreis aus verschiedenen Werkstoffkombinationen bestehen.

Hier werden zur Magnetkraftoptimierung die mediumsberührten Teile Jochstopfen und Kernbolzen aus edleren, korrosionsunempfindlichen Stählen, die magnetisch ungünstiger sind, verwendet, dafür aber mit größeren Durchmessern gefertigt. Der Eisenquerschnitt wird also auf der Seite des Ventilbetätigungselements erhöht. Der feststehende Jochbolzen, welcher keinen Mediumskontakt hat, wird aus einem gut magnetisierbaren Material gefertigt. Sein Querschnitt kann kleiner gewählt werden, wodurch mehr Spulenbauraum zur Verfügung steht.

Die Optimierung des Eisenkreises erfolgt durch Kombination unterschiedlicher Komponenten wie Magnetspulen, Jochbolzen, Jochschenkel, Jochstopfen, Kernbolzen und Bauform.

Weitere Vorteile und Merkmale der Erfindung ergeben sich aus der folgenden Beschreibung mehrerer Ausführungsformen unter Bezugnahme auf die beigefügten Zeichnungen. In den Zeichnungen zeigen:
- Figur 1 eine Prinzipskizze eines Hubanker-Antriebs mit doppelter Magnetspule und Ankopplung an ein Sitzventil;
- Figur 2 bis Figur 5 schematische Schnittansichten verschiedener Ausführungsformen des Hubanker-Antriebs; und
- Figur 6 eine schematische Schnittansicht eines Ventils mit einer Variante des Hubanker-Antriebs.

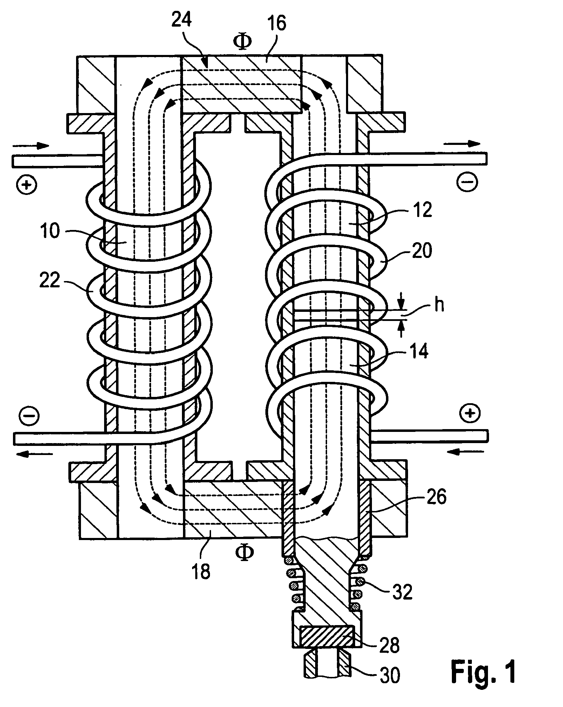

Der in Figur 1 gezeigte Hubanker-Antrieb besteht aus einem Magnetjoch und zwei Magnetspulen. Das Magnetjoch besteht aus einem Jochbolzen 10, einem Jochstopfen 12, einem Kernbolzen 14 und zwei Jochschenkeln 16, 18. Das Magnetjoch bildet einen Eisenkreis, der nur durch einen Luftspalt der Höhe h zwischen Jochstopfen 12 und Kernbolzen 14 unterbrochen ist. Eine erste Magnetspule 20 umgibt den Jochstopfen 12 und den Kernbolzen 14. Eine zweite Magnetspule 22 umgibt den Jochbolzen 10. Die Magnetspulen 20, 22 können parallel oder in Reihenschaltung betrieben werden. Bei der in Figur 1 angegebenen Polung ergibt sich eine Flussrichtung des Magnetflusses Φ, die durch Pfeile 24 angedeutet ist.

Der Kernbolzen 14 ist axial beweglich geführt und durchragt eine in eine Öffnung des Jochschenkels 18 eingesetzte Polhülse 26. Das freie Stirnende des Kernbolzens 14 trägt einen Dichtkörper 28, der mit einem Dichtsitz 30 eines Ventils zusammenwirkt, das in Figur 1 nur durch diesen Dichtsitz 30 angedeutet ist. Eine Druckfeder 32 ist zwischen einer Schulter am Stirnende des Kernbolzens 14 und der Polhülse 26 abgestützt und beaufschlagt den Kernbolzen 14 gegen den Dichtsitz 30.

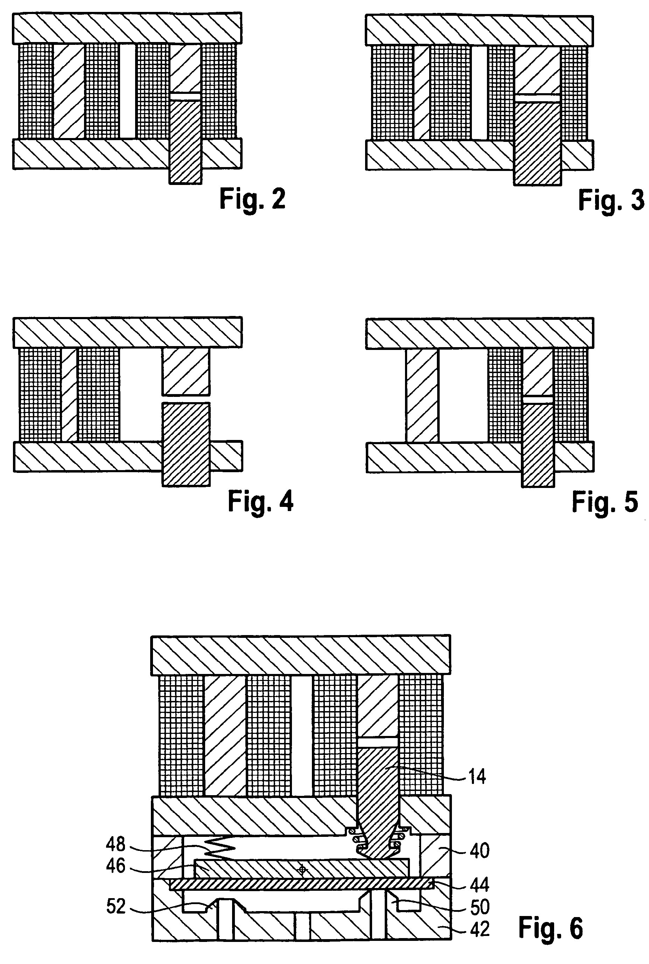

Die verschiedenen Bestandteile des Hubanker-Antriebs können in unterschiedlicher Größe und Bauform ausgeführt sein und auf verschiedene Weise miteinander kombiniert werden, wie nun anhand der Figuren 2 bis 5 erläutert wird.

Die Figur 2 zeigt eine Ausführung mit zwei gleichen Magnetspulen und im Durchmesser gleich dimensionierten Joch- und Kernbolzen Im Vergleich mit Magnetventilen, die nur eine Spule enthalten, ist die Magnetkraft bei gleicher Bauhöhe und -breite erheblich vergrößert.

In Fig. 3 ist ein Ausführungsbeispiel dargestellt, das besonders günstig ist, wenn im Ventil keine Mediumstrennung vorgesehen ist. Jochstopfen und Kernbolzen werden deshalb aus einem korrosionsbeständigen Stahl gefertigt, welcher magnetisch ungünstiger ist.

Unter diesen Umständen kann eine optimale Magnetkraft erzielt werden, wenn der Querschnitt von Stopfen und Kern vergrößert wird. Der Jochbolzen ist gegenüber Jochstopfen und Kernbolzen mit vermindertem Durchmesser ausgeführt und die Wicklungsräume der entsprechenden Magnetspulen sind entsprechend größer bzw. kleiner dimensioniert.

Der verminderte Durchmesser des Jochbolzens kann durch Ausführung aus hochwertigem Weicheisen kompensiert werden.

Die Abwandlung in Figur 4 gegenüber Figur 3 besteht darin, dass nur eine Magnetspule verwendet wird, die den Jochbolzen umgibt.

Bei der Variante in Figur 5 umgibt die Magnetspule nur den Jochstopfen und Kernbolzen. Dieses Ausführungsbeispiel entspricht in wesentlichen Teilen bekannten Magnetventilen. Allerdings wird durch diese Anordnung unerwünscht auftretender Streufluss reduziert. Bei alternativen Systemen wie Topfmagnet oder Spule, die von Bügeljochen umgeben wird, liegen sich damit innerhalb der Jochschenkel wesentlich größere magnetisch leitende Flächen gegenüber als im hier beschriebenen Ausführungsbeispiel mit Jochbolzen. Der Jochbolzen ist parallel zur Spule angeordnet aber zu dieser beabstandet.

Die Figur 6 zeigt eine Anwendung des Hubanker-Antriebs in der Ausführung gemäß Figur 2 als Antrieb eines Ventils. Das Ventil besteht aus zwei Gehäuseteilen 40, 42, die durch eine dazwischen eingespannte Membran 44 getrennt sind. In dem Gehäuseteil 40 ist eine Wippe 46 schwenkbar gelagert. Gegen das eine Ende der Wippe 46 drückt der Kernbolzen 14 des Hubanker-Antriebs, und das andere Ende der Wippe 46 wird durch eine Druckfeder 48 beaufschlagt. Im Gehäuseteil 42 sind zwei Dichtsitze 50, 52 gebildet. Durch Verschwenken der Wippe 46 wird die Membran 44 gegen den einen oder anderen Dichtsitz 50, 52 bewegt.

## Patentansprüche

1. Elektromagnetischer Hubanker-Antrieb, insbesondere für Ventile, mit einem Magnetjoch, das zwei parallele beabstandete Jochschenkel (16, 18), einen zu den Jochschenkeln (16, 18) senkrechten und diese verbindenden Jochbolzen (10), einen zum Jochbolzen (10) parallelen Jochstopfen (12) im Abstand von diesem und einen mit dem Jochstopfen (12) koaxialen Kernbolzen (14) aufweist, wobei der Kernbolzen (14) axial verschiebbar und einen der Jochschenkel (18) durchragend geführt ist und mit dem Jochstopfen (12) einen Luftspalt ausbildet, wobei sowohl der Jochbolzen (10) einerseits als auch der Jochstopfen (12) mit Kernbolzen (14) andererseits von je einer Magnetspule (20, 22) umgeben ist.

2. Hubanker-Antrieb nach Anspruch 1, bei dem der Jochbolzen (10) einen gegenüber dem Jochstopfen (12) und Kernbolzen (14) reduzierten Durchmesser aufweist und die den Jochbolzen (10) umgebende Magnetspule (22) ein entsprechend vergrößertes Wicklungsvolumen aufweist.

3. Hubanker-Antrieb nach Anspruch 2, bei dem der Jochbolzen (10) mit gegenüber dem Jochstopfen (12) und Kernbolzen (14) reduziertem Durchmesser aus hochwertigem Weicheisen besteht.

4. Elektromagnetischer Hubanker-Antrieb, insbesondere für Ventile, mit einem Magnetjoch, das zwei parallele beabstandete Jochschenkel (16, 18), einen zu den Jochschenkeln (16, 18) senkrechten und diese verbindenden Jochbolzen (10), einen zum Jochbolzen (10) parallelen Jochstopfen (12) im Abstand von diesem und einen mit dem Jochstopfen (12) koaxialen Kernbolzen (14) aufweist, wobei der Kernbolzen (14) axial verschiebbar und einen der Jochschenkel (18) durchragend geführt ist und mit dem Jochstopfen (12) einen Luftspalt ausbildet, wobei nur der Jochbolzen (10) von einer Magnetspule (22) umgeben ist, der Jochbolzen (10) einen gegenüber dem Jochstopfen (12) und Kernbolzen (14) reduzierten Durchmesser aufweist und die den Jochbolzen (10) umgebende Magnetspule (22) ein entsprechend vergrößertes Wicklungsvolumen aufweist.

5. Hubanker-Antrieb nach einem der vorstehenden Ansprüche, bei dem die Jochschenkel (16, 18) aus geschichteten Blechen gebildet sind.

6. Hubanker-Antrieb nach einem der vorstehenden Ansprüche, bei dem die Magnetspulenanschlüsse stiftförmig ausgebildet und axial zu einer einem Jochschenkel (16, 18) benachbarten Leiterplatte geführt sind.

7. Hubanker-Antrieb nach einem der vorstehenden Ansprüche, bei dem die Magnetspulen (20, 22), Jochbolzen (10), Jochschenkel (16, 18), Jochstopfen (12) und Kernbolzen (14) in verschiedenen Bauformen frei kombinierbar sind.

8. Ventil, insbesondere miniaturisiertes Magnetventil, mit einem Hubanker-Antrieb nach einem der vorstehenden Ansprüche, wobei der Kernbolzen (14) an seinem äußeren axialen Stirnende einen Dichtkörper (28) trägt, der mit einem Dichtsitz (30) des Ventils zusammenwirkt.

9. Ventil, insbesondere miniaturisiertes Magnetventil, mit einem Hubanker-Antrieb nach einem der vorstehenden Ansprüche, wobei der Kernbolzen (14) an seinem äußeren axialen Stirnende eine Schaltwippe (46) betätigt, die ihrerseits eine mit zwei Dichtsitzen (50, 52) des Ventils zusammenwirkende Membran (44) betätigt.

10. Ventil nach Anspruch 8 oder 9, mit Medientrennung zwischen Antrieb und Fluidseite, bei dem die Bestandteile des Magnetjochs aus einem Material mit hoher Sättigungsmagnetisierung wie Kobalteisen bestehen.

11. Ventil nach Anspruch 8 oder 9, ohne Medientrennung zwischen Antrieb und Fluidseite, bei dem die in Fluidkontakt stehenden Bestandteile des Magnetjochs aus einem korrosionsbeständigen Material wie Stahl bestehen und gegenüber einer Ausführung aus einem Material mit hoher Sättigungsmagnetisierung größer dimensioniert sind.

## Claims

1. An electromagnetic lifting armature drive, in particular for a valve, comprising a magnetic yoke including two parallel spaced yoke legs (16, 18), a yoke rod (10) perpendicular to and connecting the yoke legs (16, 18), a yoke stud (12) parallel to and at a distance from the yoke rod (10), and a core plug (14) coaxial with the yoke stud (12), wherein the core plug (14) is axially displaceable and guided so as to pass through one of the yoke legs (18) and defines an air gap with the yoke stud (12), both the yoke rod (10), on the one hand, and also the yoke stud (12) with the core plug (14), on the other hand, being surrounded by a respective solenoid coil (20, 22).

2. The lifting armature drive according to claim 1, in which the yoke rod (10) has a reduced diameter as compared with those of the yoke stud (12) and the core plug (14), and the solenoid coil (22) surrounding the yoke rod (10) has a correspondingly increased winding volume.

3. The lifting armature drive according to claim 2, in which the yoke rod (10) having the reduced diameter as compared with those of the yoke stud (12) and the core plug (14) consists of a high-quality soft iron.

4. An electromagnetic lifting armature drive, in particular for a valve, comprising a magnetic yoke including two parallel spaced yoke legs (16, 18), a yoke rod (10) perpendicular to and connecting the yoke legs (16, 18), a yoke stud (12) parallel to and at a distance from the yoke rod (10), and a core plug (14) coaxial with the yoke stud (12), wherein the core plug (14) is axially displaceable and guided so as to pass through one of the yoke legs (18) and defines an air gap with the yoke stud (12), wherein only the yoke rod (10) is surrounded by a solenoid coil (22), the yoke rod (10) has a reduced diameter as compared with those of the yoke stud (12) and the core plug (14), and the solenoid coil (22) surrounding the yoke rod (10) has a correspondingly increased winding volume.

5. The lifting armature drive according to any of the preceding claims, in which the yoke legs (16, 18) are formed of laminated metal sheets.

6. The lifting armature drive according to any of the preceding claims, in which the solenoid coil connections are configured pin-shaped and are guided axially to a printed circuit board adjacent to a yoke leg (16, 18).

7. The lifting armature drive according to any of the preceding claims, in which various designs of the solenoid coils (20, 22), yoke rods (10), yoke legs (16, 18), yoke studs (12) and core plugs (14) can be freely combined.

8. A valve, in particular a miniaturized solenoid valve, comprising a lifting armature drive according to any of the preceding claims, wherein the core plug (14) carries a sealing body (28) at its outer axial face end, the sealing body cooperating with a sealing seat (30) of the valve.

9. A valve, in particular a miniaturized solenoid valve, comprising a lifting armature drive according to any of the preceding claims, wherein the core plug (14) actuates a switching rocker (46) at its outer axial face end, the switching rocker in turn actuating a diaphragm (44) cooperating with two sealing seats (50, 52) of the valve.

10. The valve according to claim 8 or 9, with a media separation between the drive and the fluid side, in which the components of the magnetic yoke consist of a high saturation magnetization material such as cobalt iron.

11. The valve according to claim 8 or 9, without a media separation between the drive and the fluid side, in which the components of the magnetic yoke which are in fluid contact consist of a corrosion-resistant material such as steel and are dimensioned to be larger as compared with a configuration made from a high saturation magnetization material.

## Revendications

1. Entraînement d'induit de levage électromagnétique, en particulier pour valves, comportant une culasse magnétique qui présente deux branches de culasse (16, 18) parallèles et espacées, une tige de culasse (10) qui est perpendiculaire aux branches de culasse (16, 18) et qui relie ces dernières, un bouchon de culasse (12) qui est parallèle à la tige de culasse (10) et est espacé de celle-ci, et une tige de noyau (14) coaxiale au bouchon de culasse (12), la tige de noyau (14) étant axialement déplaçable et étant guidée de manière à traverser l'une des branches de culasse (18) et formant un entrefer avec le bouchon de culasse (12), tant la tige de culasse (10), d'une part, que le bouchon de culasse (12) avec la tige de noyau (14), d'autre part, étant entourés d'une bobine d'électroaimant (20, 22) respective.

2. Entraînement d'induit de levage selon la revendication 1, dans lequel la tige de culasse (10) présente un diamètre réduit par rapport au bouchon de culasse (12) et à la tige de noyau (14), et dans lequel et la bobine d'électroaimant (22) entourant la tige de culasse (10) présente un volume d'enroulement augmenté de manière appropriée.

3. Entraînement d'induit de levage selon la revendication 2, dans lequel la tige de culasse (10) présentant un diamètre réduit par rapport au bouchon de culasse (12) et à la tige de noyau (14) est en fer doux de haute qualité.

4. Entraînement d'induit de levage électromagnétique, en particulier pour valves, comportant une culasse magnétique qui présente deux branches de culasse (16, 18) parallèles et espacées, une tige de culasse (10) qui est perpendiculaire aux branches de culasse (16, 18) et qui relie ces dernières, un bouchon de culasse (12) qui est parallèle à la tige de culasse (10) et est espacé de celle-ci, et une tige de noyau (14) coaxiale au bouchon de culasse (12), la tige de noyau (14) étant axialement déplaçable et étant guidée de manière à traverser l'une des branches de culasse (18) et formant un entrefer avec le bouchon de culasse (12), seule la tige de culasse (10) étant entourée d'une bobine d'électroaimant (22), la tige de culasse (10) présentant un diamètre réduit par rapport au bouchon de culasse (12) et à la tige de noyau (14) et la bobine d'électroaimant (22) entourant la tige de culasse (10) présentant un volume d'enroulement augmenté de manière appropriée.

5. Entraînement d'induit de levage selon l'une des revendications précédentes, dans lequel les branches de culasse (16, 18) sont formées par des tôles laminées.

6. Entraînement d'induit de levage selon l'une des revendications précédentes, dans lequel les raccords de bobine d'électroaimant sont réalisés en forme de goupilles et sont guidés axialement par rapport à une carte de circuit imprimé adjacente à une branche de culasse (16, 18).

7. Entraînement d'induit de levage selon l'une des revendications précédentes, dans lequel différentes configurations des bobines d'électroaimant (20, 22), des tiges de culasse (10), des branches de culasse (16, 18), des bouchons de culasse (12) et des tiges de noyau (14) peuvent être combinées librement.

8. Valve, en particulier électrovalve miniaturisée, comportant un entraînement d'induit de levage selon l'une des revendications précédentes, la tige de noyau (14) supportant à son extrémité frontale axiale extérieure un corps d'étanchéité (28) qui coopère avec un siège d'étanchéité (30) de la valve.

9. Valve, en particulier électrovalve miniaturisée, comportant un entraînement d'induit de levage selon l'une des revendications précédentes, la tige de noyau (14) actionnant à son extrémité frontale axiale extérieure une bascule de commutation (46) qui actionne pour sa part une membrane (44) coopérant avec deux sièges d'étanchéité (50, 52) de la valve.

10. Valve selon la revendication 8 ou 9 avec séparation de milieux entre l'entraînement et le côté fluide, dans laquelle les composants de la culasse magnétique sont réalisés en une matière présentant une saturation magnétique élevée telle que le fer de cobalt.

11. Valve selon la revendication 8 ou 9 sans séparation de milieux entre l'entraînement et le côté fluide, dans laquelle les composants de la culasse magnétique qui sont en contact fluidique sont réalisés en une matière résistante à la corrosion telle que l'acier, et sont dimensionnés plus grands par rapport à une réalisation en une matière à saturation magnétique élevée.
